# EUROPÄISCHE PATENTSCHRIFT

(11) **EP 3 263 954 B1**
(45) Veröffentlichungstag und Bekanntmachung des Hinweises auf die Patenterteilung: **11.12.2019**
(21) Anmeldenummer: 16001439.5
(22) Anmeldetag: 28.06.2016
(51) Int. Cl.: F16H 61/4139, F16H 61/431, F16H 61/433

(54) **HYDROSTATISCHER ANTRIEB MIT GESCHLOSSENEM KREISLAUF UND VERFAHREN ZUM BETRIEB DES ANTRIEBS**
HYDROSTATIC DRIVE WITH CLOSED CIRCUIT AND METHOD FOR OPERATING THE DRIVE
ENTRAINEMENT HYDROSTATIQUE COMPRENANT UN CIRCUIT FERME ET PROCEDE DE FONCTIONNEMENT DE L'ENTRAINEMENT

(43) Veröffentlichungstag der Anmeldung: 03.01.2018
(73) Patentinhaber: Thomas Magnete GmbH, 57562 Herdorf (DE); HP Hydraulik S.p.A., 40066 Pieve di Cento (IT)
(72) Erfinder: Gambetti, Andrea, 41051 Castelnuovo, Rangone (Mo) (IT); Maxeiner, Thassilo, 97737 Gemünden (DE)

(56) Entgegenhaltungen:
- EP-A1- 2 503 195
- EP-A2- 2 199 622
- EP-B2- 1 527 939
- DE-A1-102012 005 824
- DE-A1-102013 008 792
- FR-A1- 2 996 270

## Beschreibung

Die Erfindung betrifft einen hydrostatischen Antrieb mit geschlossenem Kreislauf entsprechend dem Oberbegriff des ersten Patentanspruchs. Solche Antriebe enthalten vorzugsweise Axialkolbenpumpen mit elektrohydraulischer schaltend oder proportional wirkender Verstellung, aber auch auf Pumpen mit hydraulischer Fernverstellung und Pumpen mit elektronisch automotiver Ansteuerung. In vielen Anwendungen werden nicht nur die Pumpe, sondern auch ein damit verbundener hydrostatischer Motor verstellt.

### Stand der Technik:

Bei Antrieben mit geschlossenem Kreislauf ist eine Flüssigkeitseinspeisung mittels einer Speisepumpe erforderlich. Dabei wird der Speisedruck üblicherweise fest auf einen Druck eingestellt, der auch gleichzeitig die Entnahme der Stellenergie für die Pumpenverstellung gewährleistet; in der Regel ist somit ein Versorgungsdruck von 20-30 bar für die Pumpenverstellung vorgegeben. Mit diesem Versorgungsdruck kann die Pumpenverstellung sicher betätigt werden. Aber damit muß auch der Speisedruck für den geschlossenen Kreislauf konstant auf diesem Druckniveau gehalten werden; die erforderliche Antriebsleistung für die Speisepumpe ist definiert durch das Produkt von Fördermenge mal Speisedruck, welcher aber niedriger sein könnte, wenn der Steuerdruck nicht aus dem Speisekreis entnommen würde.

Bekannt ist aus der Druckschrift DE 10 2012 005 824A1 eine schaltbare Reduzierung des Speisedrucks, verbunden mit der gleichzeitigen Reduzierung des aus dem Speisedruck entnommenen Steuerölversorung, was die mögliche Pumpenausschwenkung gegen die zentrierend wirkende Feder reduziert.

In der Druckschrift zur Erfindung einer Speisedruckabsenkung nach EP 2 503 195 A1 ist im Abschnitt 0007 die mechanische Entkoppelung der Speisepumpe von der Hydraulikpumpe dargestellt, welche die vorliegende Erfindung nicht benötigt. Die dort in den Abschnitten 0009 und 0050 bis 0052 dargestellte proportionale Druckregelung des Speisedrucks dient zur Mengenregelung der Ausspeisemenge in Abhängigkeit des Kühlbedarfs im geschlossenen Kreislauf. In dieser Erfindung ist gemäß Fig.8 eine Kopplung des Versorgungsdrucks an den Speisedruck ohne die Möglichkeit der Speicherung der Stellenergie in einem Hydrospeicher oder Erzeugung der Stellenergie mittels einer Elektropumpe vorgesehen.

Die Erfindung nach der Druckschrift EP 1 527 939 B2 besitzt einen Hydrospeicher (51) im Steuerölkreis, welcher durch ein Speicherladeventil (52) aufgeladen wird, das aus dem Speisepumpenkreis gespeist wird und Stellenergie für die Aufsteuerung der hydraulisch lüftenden Feststellbremsen an den Verstellmotoren zur Verfügung stellt. Die Erfindung dient jedoch nicht der Absenkung des Speisedrucks bei gleichzeitiger Aufrechterhaltung der Steuerölversorgung der Pumpenverstellung.

### Aufgabe:

Mit der vorliegenden Erfindung soll ein Antrieb beschrieben werden, der eine Absenkung des von der Speisepumpe bereigestellten Speisedrucks ermöglicht, und gleichzeitig eine hinsichtlich des Drucks und der Fördermenge bedarfsgerechte Versorgung der Verstelleinheit des Antriebs bewirkt.

### Lösung:

Die Aufgabe wird durch die charakteristischen Merkmale des Hauptanspruchs gelöst, weitere Ansprüche führen die Erfindung näher aus und beschreiben Verfahren zum Betrieb des Antriebs.

Die Reduzierung des Speisedrucks wird in bekannter Weise mittels des verstellbaren Speisedruckbegrenzungsventils bewirkt.

Damit der Druck der Versorgung der Verstelleinheit des Antriebs nicht ebenfalls reduziert wird, enthält die Versorgungseinheit ein elektrohydraulisches Motor-Pumpen-Aggregat, das vorzugsweise einen variablen Druck und eine variable Fördermenge bereitstellt. Die Fördermenge wird dabei durch die Drehzahl von Hilfspumpe und Elektromotor und der Druck wird beispielsweise durch das Drehmoment des Elektromotors begrenzt.

Damit der Druck und die Fördermenge bedarfsgerecht bereitgestellt werden, ermittelt eine elektrische Hilfssteuerung den Bedarf der Verstelleinheit aus elektrischen Signalen, die von einer übergeordneten Antriebssteuerung oder aus der Verstelleinheit selbst empfangen werden. Entsprechend dem ermittelten Bedarf werden die Drehzahl und das Drehmoment des Elektromotors gestellt.

Um die Leistungsaufnahme des Elektromotors niedrig zu halten, wird vorteilhafterweise der Auslass der Speisepumpe mit dem Einlass der Hilfspumpe verbunden, denn hydraulische Leistung lässt sich in Fahrzeugen und fahrenden Arbeitsmaschinen kostengünstiger bereitstellen als elektrische Leistung.

Vorteilhafterweise wird auch das Speisedruckbegrenzungsventil zur Einstellung des Speisedrucks von der genannten elektrischen Hilfssteuerung verstellt, vorzugsweise mittels eines elektrohydraulischen Aktors.

Um kurzzeitige besonders hohe hydraulische Leistungsanforderungen der Verstelleinheit bedienen zu können, wird die beschriebene Versorgungseinheit vorteilhafterweise durch einen Hydrospeicher ergänzt, der über ein Rückschlagventil von der Hilfspumpe gefüllt wird.

Um den Druck der Versorgungseinheit nicht nur steuern, sondern auch regeln zu können, wird die Versorgungseinheit vorteilhafterweise um einen elektrohydraulischen Druckaufnehmer ergänzt, dies ermöglicht eine Messung des Drucks und im geschlossenen Regelkreis eine bedarfsgerechte Einstellung der Drehzahlund des Drehmoments des Elektromotors.

Wenn die elektrische Hilfssteuerung auch das Speisedruckventil verstellen soll, ist es von Vorteil, dass diese Hilfssteuerung Informationen über die Drücke in den Arbeitsleitungen des Antriebs erhält, damit sie aus den genannten Drücken die Belastung des Antriebs und damit den Speisedruckbedarf ermitteln kann. Der Speisedruckbedarf kann auch abhängig von der Drehzahl des hydrostatischen Motors beschrieben werden, in diesem Fall erlauben die Signale aus der Antriebssteuerung eine Abschätzung und Berücksichtigung der Drehzahl.

Wenn der Speisedruckbedarf und der Leistungsbedarf der Versorgungseinheit niedrig sind, wird der Speisedruck durch die Hilfssteuerung auf einen niedrigeren Wert verstellt und damit wird die Leistungsaufnahme der Speisepumpe reduziert, was insbesondere im Teillastbetrieb den Wirkungsgrad des hydrostatischen Antriebs verbessert.

### Anwendung:

Hydrostatische Antriebe der beschriebenen Art finden beispielsweise in selbstfahrenden Arbeitsmaschinen Anwendung.

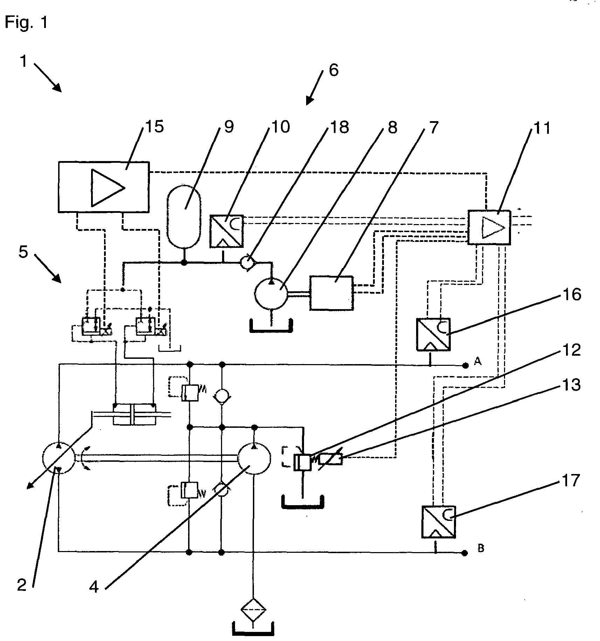

Bilder: Fig. 1 zeigt den Schaltplan des erfindungsgemäßen hydrostatischen Antriebs.

### Beispielhafte Ausführung

Ein hydrostatischer Antrieb (1) entsprechend Fig. 1, besteht mindestens aus einer Verstellpumpe (2), einem oder mehreren nicht dargestellten Hydraulikmotoren, einer Speisepumpe (4), einem Speisedruckbegrenzungsventil (12), einer Verstelleinheit (5) und einer die Verstelleinheit ansteuernden Antriebssteuerung (15).

Dabei wird die Verstelleinheit (5) durch eine elektrohydraulische Versorgungseinheit (6) mit hydraulischer Energie versorgt und die Versorgungseinheit (6) besteht aus einem Elektromotor (7) und einer damit gekuppelten Hilfspumpe (8), deren Auslass mit der Verstelleinheit (5) verbunden ist.

Der Einlass der Hilfspumpe (8) ist in einer alternativen Ausführung mit dem Auslass der Speisepumpe (4) verbunden.

Der Auslass der Hilfspumpe (8) ist mit der Verstelleinheit (5) und vorteilhafterweise über ein Rückschlagventil (18) mit einem Hydrospeicher (9) verbunden.

Vorzugsweise ist die Hilfspumpe (8) auch mit einem elektrohydraulischen Drucksensor (10) verbunden, wobei der Drucksensor (10) sein elektrisches Signal an eine elektrische Hilfssteuerung (11) abgibt und wobei die elektrische Hilfssteuerung (11) den Elektromotor (7) ein- und ausschaltet oder hinsichtlich seiner Drehzahl und/oder hinsichtlich seines Drehmoments steuert.

Das Speisedruckbegrenzungsventil (12) ist vorzugweise als elektrohydraulisches Ventil ausgeführt, wobei ein elektrischer Aktuator (13) das Speisedruckbegrenzungsventil verstellt und wobei der elektrische Aktuator elektrisch mit der Hilfssteuerung (11) verbunden ist.

Weiter vorzugsweise ist das Speisedruckbegrenzungsventil (12) als proportionalwirkendes elektrohydraulisches Ventil ausgeführt, wobei die Hilfssteuerung (11) ein proportionales elektrisches Signal an den an den elektrischen Aktuator (13) abgibt, wobei der elektrische Aktuator (13) so eingerichtet ist, dass mit ansteigendem elektrischen Strom der Sollwert des Speisedrucks vermindert wird und mit fallendem elektrischen Strom der Sollwert des Speisedrucks erhöht wird. Dadurch wird erreicht, dass bei einem Ausfall des elektrischen Stroms der Speisedruck seinen sicheren Maximalwert einnimmt.

Vorteihafterweise sind die Auslässe für die Arbeitsdrücke der Verstellpumpe (2) mit Arbeitsdrucksensoren (16, 17) verbunden, wobei die Signale der Arbeitsdrucksensoren zu der Hilfssteuerung (11) und/oder der Antriebssteuerung (15) geleitet werden.

Der Auslass der Hilfspumpe (8) ist erforderlichenfalls auch mit weiteren elektrohydraulischen oder hydromechanischen Geräten verbunden, um diese mit hydraulischer Energie zu versorgen.

Beispielsweise sind diese Geräte elektrohydraulische Ventile, die andere Ventile vorsteuern oder die Kupplungen oder Zylinder ansteuern.

Zum Betrieb des erfindungsgemäßen hydrostatischen Antriebs ist die elektrische Hilfssteuerung (11) als programmgesteuerte Steuerung ausgeführt und steuert den Elektromotor (7) so an, dass die mit dem Elektromotor (7) verbundene Hilfspumpe (8) die Verstelleinheit (5) bedarfsgerecht mit hydraulischer Energie versorgt, wobei der Bedarf aus elektrischen Signalen aus der Verstelleinheit (5), aus einer der Hilfssteuerung (11) übergeordneten Antriebssteuerung (15) oder aus Signalen der Arbeitsdrucksensoren (16, 17) ermittelt wird.

Vorzugsweise steuert die Hilfssteuerung (11) den mit der Hilfspumpe (8) verbundenen Elektromotor (7) so, dass sie ihn abhängig von dem elektrischen Signal des Drucksensors (10) ein- oder ausschaltet oder seine Drehzahl verändert, um den Druck für die Verstelleinheit (5) zu regeln und so die Verstelleinheit bedarfsgerecht mit hydraulischer Energie zu versorgen.

Erforderlichenfalls steuert die Hilfssteuerung (11) das Speisedruckbegrenzungsventil (12) elektrisch so an, dass unter Beachtung des Speisedruckbedarfs der Verstellpumpe (2) bei einem erhöhten Leistungsbedarf der Verstelleinheit (5) der Speisedruck und damit auch der Einlassdruck der Hilfspumpe (8) angehoben wird, wobei der Leistungsbedarf der Verstelleinheit (5) aus Signalen der Verstelleinheit und aus dem Signal des Drucksensors (10) in der Hilfssteuerung (11) ermittelt wird und wobei der Speisedruckbedarf der Verstellpumpe (2) aus den Signalen der Arbeitsdrucksensoren (16, 17) ermittelt wird.

Wenn kein erhöhter Leistungsbedarf der Verstelleinheit vorliegt, wird der Speisedruck so weit wie zulässig abgesenkt, unter Berücksichtigung der aus den Signalen der Arbeitsdrucksensoren und aus Signalen der Antriebssteuerung (15) ermittelten Betriebssituation des hydrostatischen Getriebes. Durch diese Absenkung des Speisedrucks wird eine erhebliche Minderung der Verlustleistung erreicht.

### Liste der Bezugszeichen

1. Hydrostatischer Antrieb
2. Verstellpumpe
4. Speisepumpe
5. Verstelleinheit
6. Versorgungseinheit
7. Elektromotor
8. Hilfspumpe
9. Hydrospeicher
10. Drucksensor
11. Elektrische Hilfssteuerung
12. Speisedruckbegrenzungsventil
13. Aktuator
15. Antriebssteuerung
16. Arbeitsdrucksensor
17. Arbeitsdrucksensor
18. Rückschlagventil

## Patentansprüche

1. Hydrostatischer Antrieb (1), mindestens bestehend aus einer Verstellpumpe (2), einem oder mehreren Hydraulikmotoren, einer Speisepumpe (4), einem verstellbaren Speisedruckbegrenzungsventil (12), einer Verstelleinheit (5) und einer die Verstelleinheit ansteuernden Antriebssteuerung (15),
**dadurch gekennzeichnet, dass**
die Verstelleinheit (5) durch eine elektrohydraulische Versorgungseinheit (6) mit hydraulischer Energie versorgt wird, wobei die Versorgungseinheit (6) aus einem Elektromotor (7) und einer damit gekuppelten Hilfspumpe (8) besteht und wobei der Auslass der Hilfspumpe (8) mit der Verstelleinheit (5) direkt oder über ein Rückschlagventil (18) verbunden ist.

2. Hydrostatischer Antrieb nach Anspruch 1, **dadurch gekennzeichnet, dass** der Elektromotor (7) von einer Hilfssteuerung (11) hinsichtlch seiner Drehzahl und/oder hinsichtlich seines Drehmoments gesteuert wird.

3. Hydrostatischer Antrieb nach Anspruch 1 oder 2, **dadurch gekennzeichnet, dass** der Einlass der Hilfspumpe (8) mit dem Auslass der Speisepumpe (4) verbunden ist.

4. Hydrostatischer Antrieb nach Anspruch 1, 2 oder 3, **dadurch gekennzeichnet, dass** der Auslass der Hilfspumpe (8) über ein Rückschlagventil (18) mit der Verstelleinheit (5) und einem Hydrospeicher (9) verbunden ist.

5. Hydrostatischer Antrieb nach Anspruch 4, **dadurch gekennzeichnet, dass** die Hilfspumpe (8) oder der Hydrospeicher (9) auch mit einem elektrohydraulischen Drucksensor (10) verbunden sind, wobei der Drucksensor (10) sein elektrisches Signal an die elektrische Hilfssteuerung (11) abgibt und wobei die elektrische Hilfssteuerung (11) den Elektromotor (7) ein- und ausschaltet oder hinsichtlich seiner Drehzahl steuert.

6. Hydrostatischer Antrieb nach Anspruch 4, **dadurch gekennzeichnet, dass** das Speisedruckbegrenzungsventil (12) als elektrohydraulisches Ventil ausgeführt ist, wobei ein elektrischer Aktuator (13) das Speisedruckbegrenzungsventil verstellt und wobei der elektrische Aktuator elektrisch mit der Hilfssteuerung (11) verbunden ist.

7. Hydrostatischer Antrieb nach Anspruch 6, **dadurch gekennzeichnet, dass** das Speisedruckbegrenzungsventil (12) als proportionalwirkendes elektrohydraulisches Ventil ausgeführt ist, wobei die Hilfssteuerung (11) ein proportionales elektrisches Signal an den an den elektrischen Aktuator (13) abgibt.

8. Hydrostatischer Antrieb nach Anspruch 7, **dadurch gekennzeichnet, dass** der elektrische Aktuator (13) so eingerichtet ist, dass mit ansteigendem elektrischen Strom der Sollwert des Speisedrucks vermindert wird und mit fallendem elektrischen Strom der Sollwert des Speisedrucks erhöht wird.

9. Hydrostatischer Antrieb nach einem der Ansprüche 5 bis 8, **dadurch gekennzeichnet, dass** die Auslässe für die Arbeitsdrücke der Verstellpumpe (2) mit Arbeitsdrucksensoren (16, 17) verbunden sind, wobei die Signale der Arbeitsdrucksensoren zu der Hilfssteuerung (11) und/oder der Antriebssteuerung (15) geleitet werden.

10. Verfahren zum Betrieb eines hydrostatischen Antriebs mindestens bestehend aus einer Verstellpumpe (2), einem oder mehreren Hydraulikmotoren, einer Speisepumpe (4), einem verstellbaren Speisedruckbegrenzungsventil (12), einer Verstelleinheit (5) und einer die Verstelleinheit ansteuernden Antriebssteuerung (15),
**dadurch gekennzeichnet, dass**
die elektrische Hilfssteuerung (11) als programmgesteuerte Steuerung ausgeführt ist und einen Elektromotor (7) so ansteuert, dass eine mit dem Elektromotor (7) verbundene Hilfspumpe (8) die Verstelleinheit (5) bedarfsgerecht mit hydraulischer Energie versorgt, wobei der Bedarf aus elektrischen Signalen der Verstelleinheit (5), der der Hilfssteuerung (11) übergeordneten Antriebssteuerung (15) oder aus Signalen der Arbeitsdrucksensoren (16, 17) ermittelt wird.

11. Verfahren zum Betrieb eines hydrostatischen Antriebs nach Anspruch 10, **dadurch gekennzeichnet, dass** die Hilfssteuerung (11) abhängig von dem elektrischen Signal eines Drucksensors (10) den mit der Hilfspumpe (8) verbundenen Elektromotor (7) ein- oder ausschaltet oder die Drehzahl des Elektromotors (7) verändert, um den Druck für die Verstelleinheit (5) zu regeln und so die Verstelleinheit bedarfsgerecht mit hydraulischer Energie zu versorgen.

12. Verfahren zum Betrieb eines hydrostatischen Antriebs nach den vorhergehenden Ansprüchen 10 oder 11, **dadurch gekennzeichnet, dass** die Hilfssteuerung (11) das Speisedruckbegrenzungsventil (12) elektrisch so ansteuert, dass unter Beachtung des Speisedruckbedarfs der Verstellpumpe (2) bei einem erhöhten Leistungsbedarf der Verstelleinheit (5) der Speisedruck und damit auch der Einlassdruck der Hilfspumpe (8) angehoben wird und entsprechend bei einem geringeren Leistungsbedarf der Speisedruck abgesenkt wird, wobei der Leistungsbedarf der Verstelleinheit (5) aus Signalen der Verstelleinheit und aus dem Signal des Drucksensors (10) in der Hilfssteuerung (11) ermittelt wird und wobei der Speisedruckbedarf der Verstellpumpe (2) aus Signalen von Arbeitsdrucksensoren (16, 17) und/oder der Antriebssteuerung (15) ermittelt wird.

## Claims

1. Hydrostatic drive (1), consisting at least of a variable displacement pump (2), one or more hydraulic motors, a feed pump (4), an adjustable feed pressure limiting valve (12), an adjusting unit (5), and a drive controller (15) which actuates the adjusting unit, **characterized in that** the adjusting unit (5) is supplied with hydraulic energy by way of an electrohydraulic supply unit (6), the supply unit (6) consisting of an electric motor (7) and an auxiliary pump (8) which is coupled to it, and the outlet of the auxiliary pump (8) being connected to the adjusting unit (5) directly or via a check valve (18).

2. Hydrostatic drive according to Claim 1, **characterized in that** the electric motor (7) is controlled with regard to its rotational speed and/or with regard to its torque by an auxiliary controller (11).

3. Hydrostatic drive according to Claim 1 or 2, **characterized in that** the inlet of the auxiliary pump (8) is connected to the outlet of the feed pump (4).

4. Hydrostatic drive according to Claim 1, 2, or 3, **characterized in that** the outlet of the auxiliary pump (8) is connected via a check valve (18) to the adjusting unit (5) and a hydraulic accumulator (9).

5. Hydrostatic drive according to Claim 4, **characterized in that** the auxiliary pump (8) or the hydraulic accumulator (9) is also connected to an electrohydraulic pressure sensor (10), the pressure sensor (10) outputting its electric signal to the electric auxiliary controller (11), and the electric auxiliary controller (11) switching the electric motor (7) on and off or controlling it with regard to its rotational speed.

6. Hydrostatic drive according to Claim 4, **characterized in that** the feed pressure limiting valve (12) is configured as an electrohydraulic valve, an electric actuator (13) adjusting the feed pressure limiting valve, and the electric actuator being connected electrically to the auxiliary controller (11).

7. Hydrostatic drive according to Claim 6, **characterized in that** the feed pressure limiting valve (12) is configured as a proportionally acting electrohydraulic valve, the auxiliary controller (11) outputting a proportional electric signal to the electric actuator (13).

8. Hydrostatic drive according to Claim 7, **characterized in that** the electric actuator (13) is set up in such a way that the setpoint value of the feed pressure is decreased as the electric current rises, and the setpoint value of the feed pressure is increased as the electric current falls.

9. Hydrostatic drive according to one of Claims 5 to 8, **characterized in that** the outlets for the working pressures of the variable displacement pump (2) are connected to working pressure sensors (16, 17), the signals of the working pressure sensors being fed to the auxiliary controller (11) and/or the drive controller (15).

10. Method for operating a hydrostatic drive at least consisting of a variable displacement pump (2), one or more hydraulic motors, a feed pump (4), an adjustable feed pressure limiting valve (12), an adjusting unit (5) and a drive controller (15) which actuates the adjusting unit, **characterized in that** the electric auxiliary controller (11) is configured as a program-controlled controller and actuates an electric motor (7) in such a way that an auxiliary pump (8) which is connected to the electric motor (7) supplies the adjusting unit (5) with hydraulic energy as required, the requirement being determined from electric signals of the adjusting unit (5), the drive controller (15) which is superordinate to the auxiliary controller (11), or from signals of the working pressure sensors (16, 17).

11. Method for operating a hydrostatic drive according to Claim 10, **characterized in that**, in a manner which is dependent on the electric signal of a pressure sensor (10), the auxiliary controller (11) switches on or off the electric motor (7) which is connected to the auxiliary pump (8), or changes the rotational speed of the electric motor (7), in order to regulate the pressure for the adjusting unit (5) and thus to supply the adjusting unit with hydraulic energy as required.

12. Method for operating a hydrostatic drive according to the preceding Claims 10 or 11, **characterized in that** the auxiliary controller (11) actuates the feed pressure limiting valve (12) electrically in such a way that, with consideration of the feed pressure requirement of the variable displacement pump (2), the feed pressure and therefore also the inlet pressure of the auxiliary pump (8) are raised in the case of an increased performance requirement of the adjusting unit (5), and the feed pressure is correspondingly lowered in the case of a lower performance requirement, the performance requirement of the adjusting unit (5) being determined from signals of the adjusting unit and from the signal of the pressure sensor (10) in the auxiliary controller (11), and the feed pressure requirement of the variable displacement pump (2) being determined from signals of working pressure sensors (16, 17) and/or the drive controller (15).

## Revendications

1. Entraînement hydrostatique (1), consistant en au moins une pompe variable (2), un ou plusieurs moteurs hydrauliques, une pompe de gavage (4), une vanne réglable de limitation de pression de gavage (12), une unité de réglage (5) et une commande d'entraînement (15) pilotant l'unité de réglage,
**caractérisé en ce que**
l'unité de réglage (5) est alimentée en énergie hydraulique par une unité d'alimentation électrohydraulique (6), dans lequel l'unité d'alimentation (6) est constituée d'un électromoteur (7) et d'une pompe auxiliaire (8) couplée à celui-ci et dans lequel la sortie de la pompe auxiliaire (8) est raccordée à l'unité de réglage (5) directement ou par le biais d'un clapet anti-retour (18).

2. Entraînement hydrostatique selon la revendication 1, **caractérisé en ce que** l'électromoteur (7) est piloté par une commande auxiliaire (11) en ce qui concerne sa vitesse de rotation et/ou son couple.

3. Entraînement hydrostatique selon la revendication 1 ou 2, **caractérisé en ce que** l'admission de la pompe auxiliaire (8) est raccordée à la sortie de la pompe de gavage (4).

4. Entraînement hydrostatique selon la revendication 1, 2 ou 3, **caractérisé en ce que** la sortie de la pompe auxiliaire (8) est raccordée à l'unité de réglage (5) et à un accumulateur hydraulique (9) par le biais d'un clapet anti-retour (18).

5. Entraînement hydrostatique selon la revendication 4, **caractérisé en ce que** la pompe auxiliaire (8) ou l'accumulateur hydraulique (9) sont également raccordés à un capteur de pression électrohydraulique (10), dans lequel le capteur de pression (10) émet son signal électrique vers la commande auxiliaire électrique (11) et dans lequel la commande auxiliaire électrique (11) allume et éteint l'électromoteur (7) ou le commande en ce qui concerne sa vitesse de rotation.

6. Entraînement hydrostatique selon la revendication 4, **caractérisé en ce que** la vanne de limitation de pression de gavage (12) est réalisée comme vanne électrohydraulique, dans lequel un actionneur électrique (13) règle la vanne de limitation de pression de gavage et dans lequel l'actionneur électrique est raccordé électriquement à la commande auxiliaire (11).

7. Entraînement hydrostatique selon la revendication 6, **caractérisé en ce que** la vanne de limitation de pression de gavage (12) est réalisée comme vanne électrohydraulique proportionnelle, dans lequel la commande auxiliaire (11) émet un signal électrique proportionnel vers l'actionneur électrique (13).

8. Entraînement hydrostatique selon la revendication 7, **caractérisé en ce que** l'actionneur électrique (13) est arrangé de telle sorte que la valeur de consigne de la pression de gavage est réduite lorsque le courant électrique augmente et la valeur de consigne de la pression de gavage est accrue lorsque le courant électrique diminue.

9. Entraînement hydrostatique selon l'une des revendications 5 à 8, **caractérisé en ce que** les sorties pour les pressions de travail de la pompe variable (2) sont raccordées à des capteurs de pression de travail (16, 17), dans lequel les signaux des capteurs de pression de travail sont envoyés à la commande auxiliaire (11) et/ou à la commande d'entraînement (15).

10. Procédé de fonctionnement d'un entraînement hydrostatique consistant en au moins une pompe variable (2), un ou plusieurs moteurs hydrauliques, une pompe de gavage (4), une vanne réglable de limitation de pression de gavage (12), une unité de réglage (5) et une commande d'entraînement (15) pilotant l'unité de réglage,
**caractérisé en ce que**
la commande auxiliaire électrique (11) est réalisée comme commande programmable et pilote un électromoteur (7) de telle sorte qu'une pompe auxiliaire (8) raccordée à l'électromoteur (7) alimente l'unité de réglage (5) en énergie hydraulique selon la demande, dans lequel la demande est déterminée à partir de signaux électriques de l'unité de réglage (5), de la commande d'entraînement (15) supérieure à la commande auxiliaire (11) ou à partir de signaux des capteurs de pression de travail (16, 17).

11. Procédé de fonctionnement d'un entraînement hydrostatique selon la revendication 10, **caractérisé en ce que** la commande auxiliaire (11) allume et éteint l'électromoteur (7) raccordé à la pompe auxiliaire (8) ou modifie la vitesse de rotation de l'électromoteur (7) en fonction du signal électrique d'un capteur de pression (10), afin de réguler la pression pour l'unité de réglage (5) et ainsi d'alimenter l'unité de réglage en énergie hydraulique selon la demande.

12. Procédé de fonctionnement d'un entraînement hydrostatique selon l'une des revendications précédentes 10 ou 11, **caractérisé en ce que** la commande auxiliaire (11) pilote électriquement la vanne de limitation de pression de gavage (12) de telle sorte que, en respectant la demande en pression de gavage de la pompe variable (2), la pression de gavage et par la même la pression d'admission de la pompe auxiliaire (8) est augmentée lors d'une demande accrue de puissance de l'unité de réglage (5) et, de manière correspondante, la pression de gavage est diminuée lors d'une demande décrue de puissance, dans lequel la demande de puissance de l'unité de réglage (5) est déterminée à partir de signaux de l'unité de réglage et du signal du capteur de pression (10) de la commande auxiliaire (11) et dans lequel la demande de puissance de la pompe variable (2) est déterminée à partir de signaux de des capteurs de pression de travail (16, 17) et/ou de la commande d'entraînement (15).
